# EUROPÄISCHE PATENTANMELDUNG

(11) **EP 3 012 545 A1**
(43) Veröffentlichungstag der Anmeldung: **27.04.2016**
(21) Anmeldenummer: 15020192.9
(22) Anmeldetag: 17.10.2015
(51) Int. Cl.: F24F 11/00, F24F 12/00

(54) **VERFAHREN UND ANORDNUNG ZUR BE- UND ENTLÜFTUNG VON RÄUMEN EINES GEBÄUDES**

(30) Priorität: 23.10.2014 DE 102014015600
(71) Anmelder: Ruckstuhl, Claus, 76831 Göcklingen (DE)
(72) Erfinder: Ruckstuhl, Claus, 76831 Göcklingen (DE)
(74) Vertreter: Kurz, Andreas

(57) **Zusammenfassung**

Die Erfindung betrifft ein Verfahren und eine Anordnung zur Be- und Entlüftung der Räume eines Gebäudes, mit mehreren dezentralen Lüftungsvorrichtungen (6), von denen jeweils mindestens eine Lüftungsvorrichtung (6) in der Außenwand (5) eines zu belüftenden Raums (2, 3, 4) angeordnet ist, mit Sensoreinheiten (14), von denen jeweils eine Sensoreinheit in einem zu belüftenden Raum (2, 3, 4) angeordnet ist, und mit einer zentralen Steuervorrichtung (17), wobei die von den einzelnen Sensoreinheiten (14) ermittelten raumspezifischen Luftparameter an die zentrale Steuervorrichtung (17) gesendet werden, und die zentrale Steuereinheit (17) aus den ermittelten raumspezifischen Istparametern und den raumspezifischen Sollparametern ein Steuersignal für die Lüftungsvorrichtungen (6) ermittelt und an diese sendet. Erfindungsgemäß wird vorgeschlagen, dass die zentrale Steuerungsvorrichtung (17) jedes Steuersignal zur eindeutigen Identifizierung mit einer den einzelnen Lüftungsvorrichtungen (6) zuordenbaren Kennzeichnung versieht, und die auf diese Weise entstehenden Datensätze an alle in Reichweite liegenden Lüftungsvorrichtungen (6) sendet, worauf jede Lüftungsvorrichtung (6) prüft, ob ein empfangener Datensatz für die prüfende Lüftungsvorrichtung (6) selbst bestimmt ist, und wobei die empfangenen Datensätze von der prüfenden Lüftungsvorrichtung (6) an die übrigen Lüftungsvorrichtungen (6) gesendet werden. Zu diesem Zweck ist jede Lüftungsvorrichtung (6) mit einem Funkmodul (15) ausgerüstet, mit dem Daten von der zentralen Steuerungsvorrichtung (17) und/oder den übrigen Lüftungsvorrichtungen (6) empfangbar sind und mit dem Daten an die zentrale Steuerungsvorrichtung (17) und/oder die übrigen Lüftungsvorrichtungen (6) sendbar sind, und mit einer lokalen Datenverarbeitungseinheit zur Prüfung der empfangenen Daten, ob diese für die Lüftungsvorrichtung bestimmt sind.

## Beschreibung

Die Erfindung betrifft ein Verfahren zur Be- und Entlüftung der Räume eins Gebäudes gemäß dem Oberbegriff des Patentanspruchs 1 sowie eine Anordnung zur Durchführung eines solchen Verfahrens gemäß dem Oberbegriff des Patentanspruchs 9.

Die verstärkten Anstrengungen bei der Verbesserung eines effizienten Wärmeschutzes von Gebäuden bringen mit sich, dass die Gebäudehülle immer luftundurchlässiger wird. Ein natürlicher Luftaustausch über die Wandfläche sowie Fenster und Türen ist daher nur noch in stark reduziertem Maße gegeben, was die Gefahr von Gesundheitsbeeinträchtigungen und Bauschäden infolge Schimmelbildung und zu hoher Raumfeuchte mit sich bringt. Um dem vorzubeugen ist es notwendig, die betroffenen Räume aktiv zu belüften.

Einfache Lösungen hierzu bestehen aus Lüftern, wie sie regelmäßig in Bädern und WCs anzutreffen sind, und die je nach Bedarf manuell bedient werden. Ob auf diese Weise eine ausreichende Raumbelüftung erfolgt, liegt somit in der Hand der Bewohner und ist daher nicht zuverlässig sichergestellt.

Aufwändigere aber auch zuverlässigere Lösungen existieren in Form komplexer Lüftungssysteme, bei denen Luftkanäle von einem zentralen Lüftungsgerät zu den einzelnen Räumen führen und die über eine regeltechnisch anspruchsvolle Steuerung für eine bestmögliche Be- und Entlüftung der Räume sorgen. Der Nachteil dieser Systeme liegt jedoch in dem verhältnismäßig großen Raumbedarf und Installationsaufwand, was solche Anlagen verhältnismäßig teuer macht.

Um diese Nachteile zu umgehen, sind auch schon dezentrale Be- und Entlüftungssysteme bekannt, bei denen in die Außenwand eines jeden Raumes ein Lüftungsgerät eingesetzt ist. Solche dezentralen Lüftungsgeräte besitzen ein oder zwei Lüfter, die wechselweise Frischluft von außen ansaugen und in den Raum einblasen bzw. Raumluft von innen nach draußen fördern, wobei in der Regel Einblasphase und Ausblasphase zeitgesteuert ablaufen. Um bei einer solchen Lüftungsart den Wärmeverlust zu minimieren, können in die Lüftungsgeräte Wärmetauscher integriert sein, die die Wärme des Ausblasstroms speichern und zur Vorwärmung des Einblasstroms nutzen. Da jedes dezentrale Lüftungsgerät autark arbeitet, ist der Installationsaufwand und Platzbedarf gering.

Vor diesem Hintergrund besteht die Aufgabe der Erfindung darin, auch dezentrale Be- und Entlüftungsgeräte zentral zu steuern, wobei die Steuerung möglichst einfach, betriebssicher und mit geringem baulichem und gerätetechnischem Aufwand erfolgen soll.

Diese Aufgabe wird durch ein Verfahren mit den Merkmalen des Patentanspruchs 1 sowie eine Anordnung mit den Merkmalen des Patentanspruchs 9 gelöst.

Vorteilhafte Ausführungsformen ergeben sich aus den Unteransprüchen.

Mit dem erfindungsgemäßen Verfahren und der erfindungsgemäßen Anordnung gelingt es, die Vorteile eines zentralen Be- und Entlüftungssystems mit den Vorteilen eines dezentralen Be- und Entlüftungssystems zu vereinen. So bleibt durch den Einsatz dezentraler Lüftungsvorrichtungen in den einzelnen Räumen der bauliche Aufwand gering, da auf Lüftungskanäle verzichtet werden kann. Dies verringert die Investitionskosten bei der Realisierung eines Be- und Entlüftungssystems für Gebäude.

Der Wegfall von Lüftungskanälen ermöglicht aber auch eine bessere Raumnutzung, da das Raumvolumen uneingeschränkt für andere Zwecke zur Verfügung steht. Zudem eignet sich ein erfindungsgemäßes Be- und Entlüftungssystem aufgrund des Wegfalls der Notwendigkeit von Lüftungskanälen in hervorragender Weise für die nachträgliche Ausrüstung von Gebäuden.

Gleichzeitig bietet ein erfindungsgemäßes Be- und Entlüftungssystem durch eine zentrale Steuerung der einzelnen Lüftungsvorrichtungen eine gezielte, auf die jeweiligen Raumerfordernisse abgestimmte raumspezifische Be- und Entlüftung, was einen sehr effizienten und wirtschaftlichen Betrieb erlaubt.

Durch die Adressierung der Datensätze zur Steuerung der einzelnen Lüftungsvorrichtungen und die Weitergabe der Datensätze von Lüftungsvorrichtung zu Lüftungsvorrichtung können selbst bei geringer Sendeleistung der einzelnen Funkmodule lange Übertragungswege energiesparend und bei geringer Strahlenbelastung für die Bewohner überbrückt werden. Aufgrund der Bildung redundanter Übertragungswege werden lokale Störungen bei der Datenübertragung isoliert oder überbrückt, so dass sich ein erfindungsgemäßes Be- und Entlüftungssystem durch eine sehr hohe Betriebssicherheit auszeichnet.

Die Erfindung wird nachstehend an hand eines in der Zeichnung dargestellten Ausführungsbeispiels näher erläutert, wobei weitere Merkmale und Vorteile der Erfindung offenbar werden. Das Ausführungsbeispiel stellt lediglich einen möglichen Weg der Ausführung der Erfindung dar, ohne jedoch die Erfindung darauf zu beschränken.

Es zeigt
- Fig. 1: den Grundriss einer Wohnung mit einem erfindungsgemäßen Be- und Entlüftungssystem,
- Fig. 2: eine Schrägansicht auf eine dezentrale Lüftungsvorrichtung , und
- Fig. 3: eine Ansicht auf ein Eingabefeld zur Steuerung des erfindungsgemäßen Be- und Entlüftungssystems.

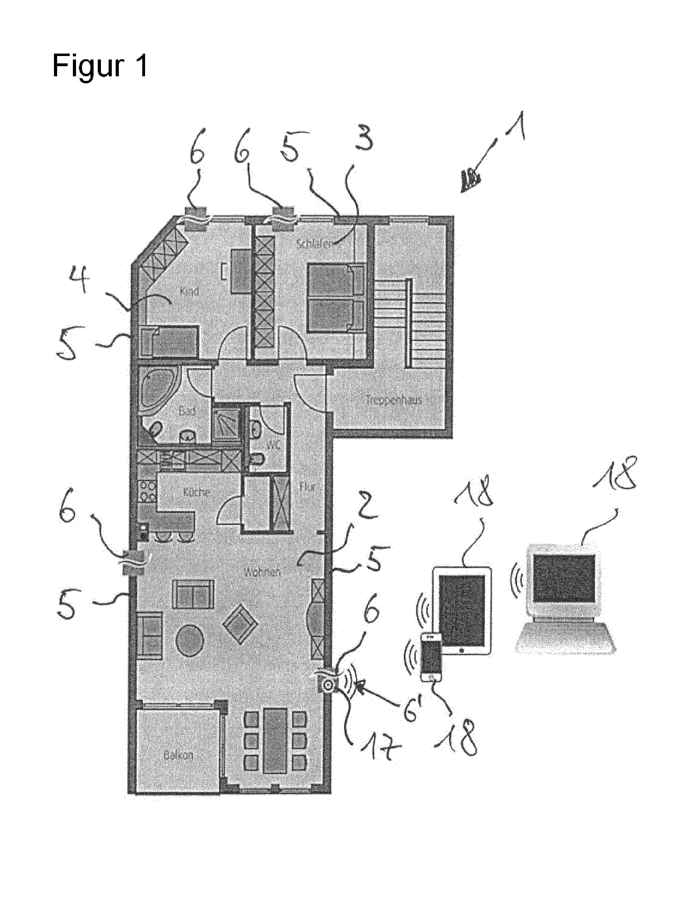

Fig. 1 stellt einen Grundriss einer Wohnung 1 dar, die mit einem erfindungsgemäßen Be- und Entlüftungssystem ausgestattet ist. Die Wohnung 1 umfasst mehrere Räume, u. a. ein Wohnzimmer 2, ein Schlafzimmer 3 und ein Kinderzimmer 4, die alle zumindest eine Außenwand 5 aufweisen. In den Außenwänden 5 der genannten Räume 2, 3, 4 sind kreiszylindrische Durchbrüche 7 angeordnet, in die Lüftungsvorrichtungen 6 eingesetzt sind, die Frischluft von außen nach innen (Zuluft) bzw. Raumluft von innen nach außen (Abluft) fördern.

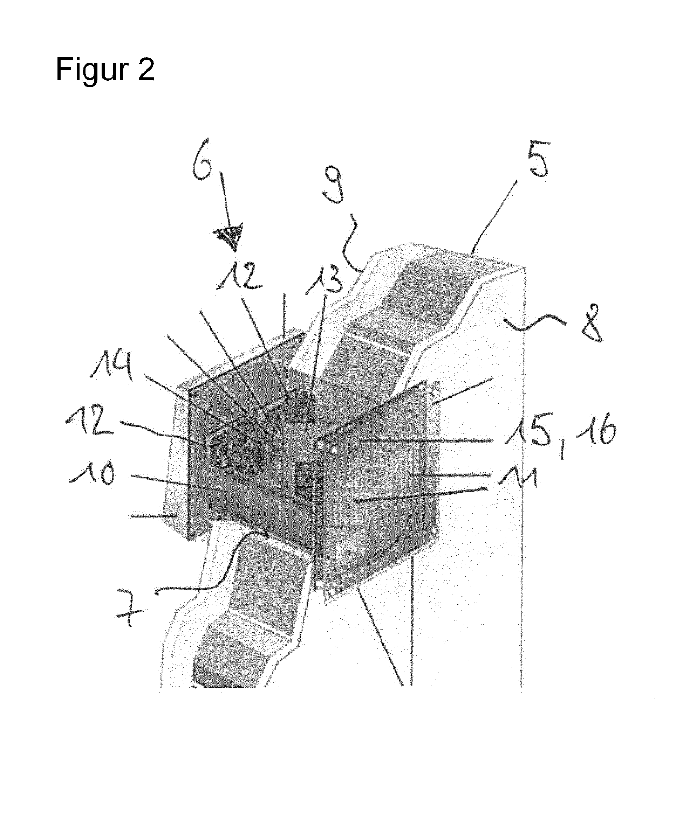

Fig. 2 zeigt exemplarisch für alle Lüftungsvorrichtungen 6 einen betreffenden Abschnitt in einer Außenwand 5 mit Lüftungsvorrichtung 6 in teils aufgebrochener, teils transparenter Darstellung.

Man sieht einen Durchbruch 7, der sich von der Rauminnenseite 8 bis zur Raumaußenseite 9 erstreckt. Die Lüftungsvorrichtung 6 umfasst im Wesentlichen einen wärmeisolierenden Schaumkörper 10, der den Durchbruch 7 vollständig ausfüllt. In den Schaumkörper 10 sind zwei durchgehende parallele, im Querschnitt rechteckförmige Kanäle 11 eingeformt, in die jeweils ein elektrisch angetriebener Lüfter 12 eingesetzt ist. Im Strömungsweg der Kanäle 11 findet sich ein Wärmetauscher 13 zur Rückgewinnung der thermischen Energie des Abluftstroms. Ferner besitzt die Lüftungsvorrichtung 6 eine Sensorvorrichtung 14 mit Feuchte-, Temperatur-, CO2-, CO- und Rauchpartikelsensoren, die sowohl den Abluftstrom als auch Zuluftstrom überwachen.

Weiter umfasst die Lüftungsvorrichtung 6 ein Funkmodul 15 zum Empfangen und Senden von Daten und eine lokale Datenverarbeitungseinheit 16 zum Auswerten der empfangenen Daten und zur Steuerung der Lüfter 12. Die lokale Datenverarbeitungseinheit 16 besteht im Wesentlichen aus einer Leiterplatte mit darauf angeordnetem IC-Bauteil und Speicher. Jede Lüftungsvorrichtung 6 ist durch eine gerätespezifische Identifikationsnummer, die in der lokalen Datenverarbeitungseinheit 16 hinterlegt ist, eindeutig identifizierbar und adressierbar.

Das erfindungsgemäße Be- und Entlüftungssystem umfasst ferner eine für alle Lüftungsvorrichtungen 6 zuständige zentrale Steuervorrichtung 17 (Fig. 1). Die Steuervorrichtung 17 besitzt im Wesentlichen eine Datenverarbeitungseinheit in Form eines Computers, einen Datenspeicher, in dem die notwendige Steuerungssoftware sowie die Basisdaten der unterschiedlichen Betriebsmodi (Sollwerte der Raumparameter) sowie die aktuellen Istwerte der Raumparameter abgelegt sind, ein Funkmodul zum Senden und Empfangen von Daten zu und von den Lüftungsvorrichtungen 6, beispielsweise im 433 MHz-Frequenzbereich, und eine oder mehrere Schnittstellen zur Datenkopplung mit Eingabegeräten 18. Die Schnittstellen können dabei kabelgebunden (LAN) oder auf Funk basierend (WLAN oder GSM) sein, so dass auf die Steuerungsvorrichtung 17 unmittelbar oder mittelbar über das Internet zugegriffen werden kann. Als Eingabegerät 18 können beispielsweise Computer, Tablet oder Mobiltelefon genutzt werden.

Die Steuerungsvorrichtung 17 kann als eigenständige Systemkomponente in der Wohnung 1 oder einem Gebäude untergebracht sein oder, wie im vorliegenden Fall, in eine Lüftungsvorrichtung 6 integriert sein. Diese Kombination aus zentraler Steuervorrichtung 17 und dezentraler Lüftungsvorrichtung 6 ist in Figur 1 mit dem Bezugszeichen 6' gekennzeichnet.

Zur Steuerung der dezentralen Lüftungsvorrichtungen 6 sind im Speicher der zentralen Steuerungsvorrichtung 17 unterschiedliche Betriebsmodi hinterlegt, die über ein Eingabegerät 18 ausgewählt werden können. Die in den einzelnen Betriebsmodi gesteuerten Raumparameter sind vor allem die Luftfeuchte und/oder die Temperatur und/oder der CO2-Gehalt und/oder der CO-Gehalt und/oder Anzahl der Rauchpartikel. Für jeden dieser Parameter sind in den einzelnen Lüftungsvorrichtungen 6 Sensoreinheilen 14 vorhanden, die den raum- bzw. lüfterspezifischen Istwert an die zentrale Steuerungsvorrichtung 17 funken. Des Weiteren sind im Speicher der zentralen Steuerungseinheit 17 für jeden dieser Parameter die betriebsartspezifischen Sollwerte hinterlegt.

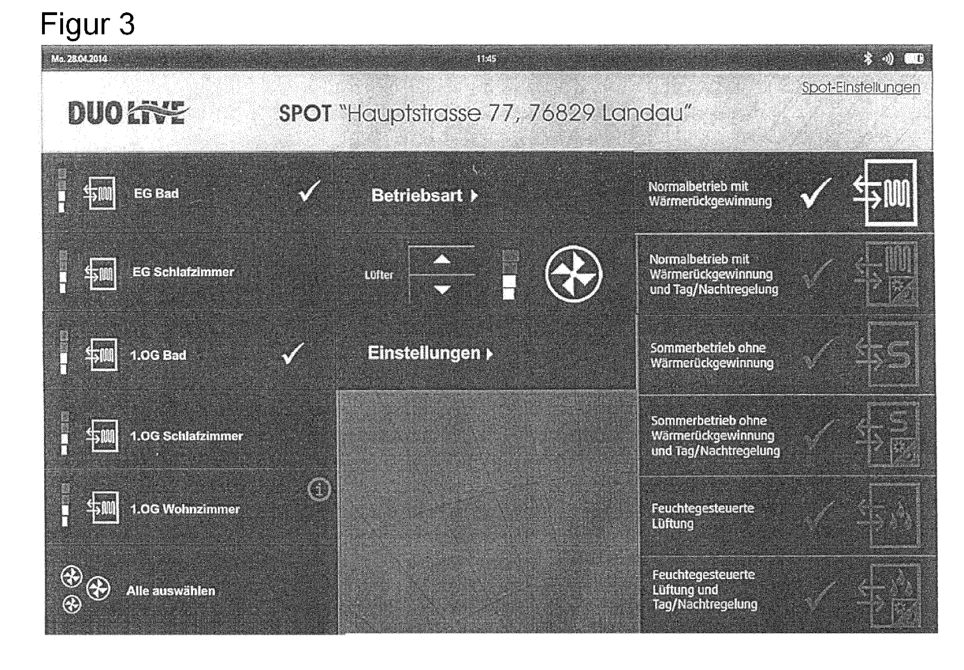

Fig. 3 zeigt beispielsweise das Auswahlmenü im Display eines Eingabegeräts 18, über das die Auswahl der Betriebsparameter vorgenommen werden kann. Beispielhaft und nicht abschließend sind nachfolgend einige Betriebsmodi beschrieben.

Im Betriebsmodus "Automatisches Lüften" werden sowohl im Zuluftstrom als auch Abluftstrom die Luftfeuchte und Temperatur ermittelt und in Abhängigkeit der jeweiligen IstWerte ein Steuersignal für die Lüftungsvorrichtung 6 errechnet und übermittelt. Das Be- und Entlüftungssystem entscheidet also selbständig anhand vorgegebener Steuerungsalgorithmen, wie ein optimales Raumklima im Hinblick auf die Luftfeuchte, -temperatur und -qualität erreicht werden kann.

Als weiterer Betriebsmodus steht "Lüften mit/ohne Wärmerückgewinnung" zur Verfügung. Die Auswahl der Option "mit Wärmerückgewinnung" macht vor allem dann Sinn, wenn die in der Raumluft vorhandene thermische Energie zur Erwärmung der Zuluft von außen genutzt werden soll. Bei der zeitabhängigen Nutzung von Räumen stehen Betriebsmodi zur Verfügung wie "Abwesenheitslüftung", zum Beispiel während der Ferien oder längerer Abwesenheit, bei dem ein minimaler Luftaustausch zur Vermeidung von Feuchte- und Frostschäden vorgenommen wird, oder eine wochentagabhängige Be- und Entlüftung, zum Beispiel in Büros oder Wohnräumen, die die zeitabhängige Nutzungsart der Räume berücksichtigen.

Ist ein Raum temporär intensiv genutzt, z.B. durch die Anwesenheit vieler Personen, so kann im Betriebsmodus "Partybetrieb" eine intensive Be- und Entlüftung durchgeführt werden, um eine ausreichende Luftqualität zu gewährleisten.

Bei dem Betriebsmodus "Sommerlüftung/Winterlüftung" werden die Sollparameter für die Be- und Entlüftung auf die von der Jahreszeit abhängigen klimatischen Rahmenbedingungen abgestimmt.

Der Betrieb eines erfindungsgemäßen Be- und Entlüftungssystems wird nachfolgend beschrieben. Zur Steuerung des erfindungsgemäßen Be- und Entlüftungssystems trifft der Benutzer mit Hilfe des Eingabegeräts 18 zunächst eine Auswahl der zu belüftenden Räume 2, 3, 4, d.h. eine Auswahl der Lüftungsgeräte 6, denen ein bestimmter Betriebsmodus zugeordnet werden soll. Anschließend wird für die einzelnen Lüftungsvorrichtungen 6 der jeweils gewünschte Betriebsmodus bestimmt. Die getroffene Auswahl wird dann zur zentralen Steuerungsvorrichtung 17 kabelgebunden (zum Beispiel LAN), funkbasierend (zum Beispiel WLAN oder GSM) oder über das Internet übermittelt.

Im Speicher der zentralen Steuerungsvorrichtung 17 sind Daten mit den Raumparametern zu den einzelnen Betriebsmodi hinterlegt (= Sollwerte). Darüber hinaus sind in der zentralen Steuerungsvorrichtung 17 die von den einzelnen Lüftungsvorrichtung 6 zyklisch erfassten und zyklisch an die zentrale Steuerungsvorrichtung 17 übermittelten Istwerte der Raumparameter abgespeichert, differenziert nach den einzelnen Räumen 2, 3, 4 bzw. jeweiliger Lüftungsvorrichtung 6, was über die gerätespezifische Identifikationsnummer möglich ist.

Die zentrale Steuerungsvorrichtung 17 prüft nun für jeden zu belüftenden Raum 2, 3, 4, ob Istwert und Sollwert der Raumparameter übereinstimmen. Bei Abweichungen werden dann für jeden zu belüftenden Raum 2, 3, 4 bzw. Lüftungsvorrichtung 6 ein raum- bzw. lüfterspezifischer Stellwert errechnet und mit einer Adressierung versehen, die den spezifischen Stellwert einem bestimmten Raum 2, 3, 4 bzw. einer spezifischen Lüftungsvorrichtung 6 zuordnet.

Die so aufbereiteten Datensätze werden über Funk, vorzugsweise im 433 MHz-Frequenzbereich, an alle in Reichweite liegenden Lüftungsvorrichtungen 6 übermittelt. Jede die Datensätze empfangende Lüftungsvorrichtung 6 prüft dann mit Hilfe der lokalen Datenverarbeitungseinheit 16 dezentral, ob ein Datensatz für diese Lüftungsvorrichtung 6 bestimmt ist oder nicht. Falls ja, werden die Steuerungsinformationen verarbeitet und die Lüftungsvorrichtung 6 entsprechend gesteuert. Darüber hinaus werden die Datensätze an in Reichweite liegende weitere Lüftungsvorrichtungen 6 übermittelt, wo eine entsprechende Prüfung stattfindet.

Die Rückmeldung der Istwerte über die Raumparameter erfolgt in entsprechender Weise in umgekehrter Richtung. Jede Lüftungsvorrichtung 6 versendet die durch eine individuelle Kennzeichnung, zum Beispiel die Geräte-Identifikationsnummer, identifizierbar gemachten Istwerte der Raumparameter in Form eines Datensatzes an in Reichweite liegende Lüftungsvorrichtungen 6 und gegebenenfalls an die zentrale Steuerungsvorrichtung 17. Sollte die zentrale Steuerungsvorrichtung 17 nicht in Reichweite einer sendenden Lüftungsvorrichtung 6 liegen, so erreicht der Datensatz dennoch die zentrale Steuerungsvorrichtung 17, indem der Datensatz von benachbarten Lüftungsvorrichtungen 6 empfangen, geprüft und weitergeleitet wird, bis dieser die zentrale Steuerungsvorrichtung 17 erreicht.

Auf diese Weise bilden mehrere Lüftungsvorrichtungen 6 zusammen einen kettenartigen Übertragungsweg, der es ermöglicht, auch Lüftungsvorrichtung 6 zentral zu steuern, die nicht in unmittelbarer Reichweite der zentralen Steuerungsvorrichtung 17 liegen. Darüber hinaus können entsprechend der Anzahl an Lüftungsvorrichtungen 6 unterschiedliche redundante Übertragungswege gebildet werden, was die Betriebssicherheit eines erfindungsgemäßen Be- und Entlüftungssystems erhöht.

Sollte die Kommunikation zwischen der zentralen Steuerungseinheit 17 und einer oder mehreren Lüftungsvorrichtungen 6 gestört sein, so veranlasst die lokale Datenverarbeitungseinheit 16 einer betroffenen Lüftungsvorrichtung 6 den Betrieb in einem Grundmodus, dessen Betriebsparameter in der lokalen Datenverarbeitungseinheit 16 der Lüftungsvorrichtung 6 hinterlegt sind.

## Patentansprüche

1. Verfahren zur Be- und Entlüftung der Räume (2, 3, 4) eines Gebäudes mit mehreren dezentralen Lüftungsvorrichtungen (6), von denen jeweils mindestens eine Lüftungsvorrichtung (6) in der Außenwand (5) eines zu belüftenden Raums (2, 3, 4) angeordnet ist,
mit Sensoreinheiten (14), von denen jeweils eine Sensoreinheit in einem zu belüftenden Raum (2, 3, 4) angeordnet ist, und
mit einer zentralen Steuervorrichtung (17),
wobei die von den einzelnen Sensoreinheiten (14) ermittelten raumspezifischen Luftparameter an die zentrale Steuervorrichtung (17) gesendet werden, und
die zentrale Steuereinheit (17) aus den ermittelten raumspezifischen Istparametern und den raumspezifischen Sollparametern ein Steuersignal für die Lüftungsvorrichtungen (6) ermittelt und an diese sendet, **dadurch gekennzeichnet, dass**
die zentrale Steuerungsvorrichtung (17) jedes Steuersignal zur eindeutigen Identifizierung mit einer den einzelnen Lüftungsvorrichtungen (6) zuordenbaren Kennzeichnung versieht, und die auf diese Weise entstehenden Datensätze an alle in Reichweite liegenden Lüftungsvorrichtungen (6) sendet,
worauf jede Lüftungsvorrichtung (6) prüft, ob ein empfangener Datensatz für die prüfende Lüftungsvorrichtung (6) selbst bestimmt ist, und
wobei die empfangenen Datensätze von der prüfenden Lüftungsvorrichtung (6) an die übrigen Lüftungsvorrichtungen (6) gesendet werden.

2. Verfahren nach Anspruch 1, **dadurch gekennzeichnet, dass** die Datensätze zwischen den Lüftungsvorrichtungen (6) untereinander und/oder den Lüftungsvorrichtungen (6) zur zentralen Steuerungsvorrichtung (17) in einem Frequenzbereich von 433 MHz gesendet werden.

3. Verfahren nach Anspruch 1 oder 2, **dadurch gekennzeichnet, dass** die Daten zwischen einem Eingabegerät (18) und der zentralen Steuerungsvorrichtung (17) über GSM, LAN, WLAN oder das Internet übertragen werden.

4. Verfahren nach einem der Ansprüche 1 bis 3, **dadurch gekennzeichnet, dass** die Steuerung der Lüftungsvorrichtungen (6) auf Basis des Luftfeuchtegehalts und/oder der Lufttemperatur und/oder des C02-Gehalts und/oder des CO-Gehalts und/oder der Anzahl an Ruß- oder Staubpartikel erfolgt.

5. Verfahren nach einem der Ansprüche 1 bis 4, **dadurch gekennzeichnet, dass** die raumspezifischen Istparameter sowohl im Abluftstrom als auch Zuluftstrom ermittelt werden.

6. Verfahren nach einem der Ansprüche 1 bis 5, **dadurch gekennzeichnet, dass** die Lüftungsvorrichtungen (6) bei Störung der Datenverbindung zur zentralen Steuerungsvorrichtung (17) autark gesteuert und betrieben werden.

7. Verfahren nach einem der Ansprüche 1 bis 6, **dadurch gekennzeichnet, dass** bei Überschreiten eines Grenzwertes eines raumspezifischen Istparameters ein Alarmsignal ausgegeben wird.

8. Verfahren nach einem der Ansprüche 1 bis 7, **dadurch gekennzeichnet, dass** jede Lüftungsvorrichtung (6) mit einer gerätespezifischen Identifikationsnummer versehen wird und die Adressierung der Datensätze mittels der gerätespezifischen Identifikationsnummer erfolgt.

9. Anordnung zur Be- und Entlüftung von Räumen (2, 3, 4) eines Gebäudes mit mehreren dezentralen Lüftungsvorrichtungen (6), von denen jeweils mindestens eine Lüftungsvorrichtung (6) in der Außenwand (5) eines zu belüftenden Raums (2, 3, 4) angeordnet ist,
mit Sensoreinheiten (14), von denen jeweils eine Sensoreinheit in einem zu belüftenden Raum (2, 3, 4) angeordnet ist, und
mit einer zentralen Steuervorrichtung (17), wobei die von den einzelnen Sensoreinheiten (14) ermittelten raumspezifischen Luftparameter an die zentrale Steuervorrichtung (17) gesendet werden, und die zentrale Steuereinheit (17) aus den ermittelten raumspezifischen Istparametem und den raumspezifischen Sollparametern ein Steuersignal für die Lüftungsvorrichtungen (6) ermittelt und an diese sendet, **dadurch gekennzeichnet, dass** jede Lüftungsvorrichtung (6) mit einem Funkmodul (15) ausgerüstet ist, mit dem Daten von der zentralen Steuerungsvorrichtung (17) und/oder den übrigen Lüftungsvorrichtungen (6) empfangbar sind, und
mit dem Daten an die zentrale Steuerungsvorrichtung (17) und/oder die übrigen Lüftungsvorrichtungen (6) sendbar sind, und
mit einer lokalen Datenverarbeitungseinheit zur Prüfung der empfangenen Daten, ob diese für die Lüftungsvorrichtung bestimmt sind.

10. Anordnung nach Anspruch 9, **dadurch gekennzeichnet, dass** die Sensoreinheiten (14) Sensoren zur Ermittlung des Luftfeuchtegehalts und/oder der Lufttemperatur und/oder des C02-Gehalts und/oder des CO-Gehalts und/oder der Anzahl an Ruß- oder Staubpartikel 10 besitzen.

11. Anordnung nach Anspruch 9 oder 10, **dadurch gekennzeichnet, dass** die Sensoreinheit (14) in die Lüftungsvorrichtung (6) integriert ist.

12. Anordnung nach einem der Ansprüche 9 bis 11, **dadurch gekennzeichnet, dass** das Funkmodul (15) einer Lüftungsvorrichtungen (6) und/oder der zentralen Steuerungsvorrichtung (17) einen Frequenzbereich von 433 MHz besitzt.

13. Anordnung nach einem der Ansprüche 9 bis 12, **dadurch gekennzeichnet, dass** das Funkmodul (15) einer Lüftungsvorrichtungen (6) und/oder der zentralen Steuerungsvorrichtung (17) sowohl eine Empfangseinheit als auch Sendeeinheit besitzt.

14. Anordnung nach einem der Ansprüche 9 bis 13, **dadurch gekennzeichnet, dass** die zentrale Steuerungsvorrichtung (17) in eine Lüftungsvorrichtung (6) integriert ist.

15. Anordnung nach einem der Ansprüche 9 bis 14, **dadurch gekennzeichnet, dass** die Schnittstelle zwischen der zentralen Steuerungseinheit (17) und einem Eingabegerät (18) kabelgebunden (LAN) oder auf Funk (WLAN, GSM) basierend ausgebildet ist.
